# EUROPÄISCHE PATENTSCHRIFT

(11) **EP 2 368 416 B1**
(45) Veröffentlichungstag und Bekanntmachung des Hinweises auf die Patenterteilung: **02.09.2015**
(21) Anmeldenummer: 11001756.3
(22) Anmeldetag: 03.03.2011
(51) Int. Cl.: A01D 34/74, A01D 34/64

(54) **Aufsitzmäher mit Höhenverstellung**
Height-adjustable lawn tractor
Tondeuse autoportée dotée d'un réglage en hauteur

(30) Priorität: 24.03.2010 DE 102010012666
(43) Veröffentlichungstag der Anmeldung: 28.09.2011
(73) Patentinhaber: AL-KO Kober AG, D-89359 Kötz (DE)
(72) Erfinder: DeFillppo, Antonio, 73342 Bad Ditzenbach (DE); Kempfle, Thomas, 89346 Bibertal (DE); Lippl, Wilhelm, 89359 Grosskoetz (DE); Strazzeri, Sandro, 89340 Leipheim (DE)
(74) Vertreter: Binder, Armin

(56) Entgegenhaltungen:
- US-A- 3 706 186
- US-A1- 2005 005 587
- US-A1- 2008 295 477

## Beschreibung

Die Erfindung betrifft einen Aufsitzmäher, aufweisend eine Tragkonstruktion, ein Fahrgestell, einen Sitz, eine Lenkvorrichtung, ein, an mindestens zwei Schwenkarmen aufgehängtes, Mähdeck, und eine Höhenverstellvorrichtung für das Mähdeck.

Ähnliche Rasenmäher sind allgemein bekannt. Beispielhaft wird auf die Europäische Patentschrift EP 0 144 214 B1 verwiesen. Diese Druckschrift zeigt einen Aufsitzmäher, allerdings ist bei diesem Aufsitzmäher die Montage der Höhenverstellung des Mähdecks sehr aufwendig, da sie aus einer großen Anzahl von Einzelteilen besteht, die jeweils montiert und justiert werden müssen.

Des Weiteren ist bei solchen Aufsitzmäher ein relativ hoher Kraftaufwand notwendig, um die Höhenverstellung des Mähdecks zu bedienen und es kann vorkommen, dass bei dem Überfahren von Unebenheiten eine einmal gewählte Höheneinstellung des Mähdecks sich entweder ungewollt verstellt oder es bedarf einer relativ aufwendigen Mimik, um die Höhenverstellung zu sichern.

US 2005/005587 A1 zeigt einen Aufsitzmäher gemäß dem Oberbegriff des Anspruches 1.

Es ist daher Aufgabe der Erfindung einen Aufsitzmäher vorzustellen, welcher einerseits wesentlich montagefreundlicher ausgestaltet ist und andererseits eine Höhenverstellvorrichtung besitzt, welche auch beim Überfahren von Unebenheiten und dadurch bedingtes Anheben des Mähdecks seine Höheneinstellung nicht verliert.

Diese Aufgabe wird durch die Merkmale des unabhängigen Patentanspruches gelöst. Vorteilhafte Weiterbildungen der Erfindung sind Gegenstand untergeordneter Ansprüche.

Die Erfinder haben erkannt, dass es möglich ist, durch eine geschickte Kombination der Anordnung der Höhenverstellvorrichtung auf der Basis einer Höhenverstellachse mit daran befestigten Hebelarmen, die in eine offene Achsenlagerung eingesetzt und durch Verschwenken gegen Herausfallen gesichert werden, und gleichzeitigem Anbringen eines Federelementes, welches sowohl dem Gewicht entgegenwirkt als auch eine federnde Rastierung des Bedienhebels bewirkt, einen wesentlich einfacher herzustellenden Aufsitzmäher zu bauen.

Entsprechend diesem Grundgedanken schlagen die Erfinder vor, einen Aufsitzmäher aufweisend:
- eine Tragkonstruktion,
- ein Fahrgestell,
- einen Sitz,
- eine Lenkvorrichtung,
- ein, an mindestens zwei Schwenkarmen aufgehängtes, Mähdeck, und
- einer Höhenverstellvorrichtung für das Mähdeck, dahingehend zu verbessern, dass
- die Höhenverstellvorrichtung eine quer zur Längsrichtung des Mähers verlaufende Höhenverstellachse aufweist,
- die Tragkonstruktion unten mindestens eine in Längsrichtung offene Achsenlagerung aufweist, in welcher die Höhenverstellachse gelagert ist,
- mindestens ein Schwenkarm über ein Verbindungselement mit mindestens einem Hebelarm verbunden ist und der Hebelarm an der Höhenverstellachse befestigt ist,
   - einem Bedienhebel, der am Hebelarm schwenkbar befestigt ist, wobei der Bedienhebel mittelbar oder unmittelbar im endmontierten Zustand in eine Rastierung eingreifen kann.

Durch diese erfindungsgemäße Ausführung des Aufsitzmähers ergibt sich eine wesentlich vereinfachte Montage mit signifikant geringerer Anzahl an Bauteilen.

Vorteilhaft kann mindestens ein Federelement am Bedienhebel angeordnet werden, welches bezüglich seiner Federwirkung so ausgerichtet ist, dass es gegen das Gewicht des Mähdecks wirkt und/oder den Bedienhebel in der Rastierung federnd fixiert.

Besonders vorteilhaft kann zur gleichmäßigen Verteilung der Kräfte, alternativ zur Anbringung der Feder am Bedienhebel, am linken und rechten Hebelarm (Bezugszeichen 10 in den Figuren) der Höhenverstellachse jeweils eine Feder angebracht werden.

Ergänzend vorteilhaft kann es sein, wenn die Achsenlagerung und die Höhenverstellachse mit dem mindestens einen daran befestigtem Hebelarm derart ausgebildet sind, dass zur Montage der Höhenverstellvorrichtung:
- die Höhenverstellachse mit dem mindestens einen daran befestigten Hebelarm in einer ersten Drehlage in die Achsenlagerung eingesetzt wird,
- die Höhenverstellachse mit dem mindestens einen daran befestigten Hebelarm in eine zweite Drehlage verdreht wird, und
- durch Aufsetzen einer Kulisse für den mit dem Hebelarm verbundenen Bedienhebel und Anbringen des Federelementes die Höhenverstellachse gegen ein Herausfallen aus der Achsenlagerung gesichert wird.

Auch ist es besonders günstig, wenn zur Montage der Höhenverstellvorrichtung der Bedienhebel mit dem Hebelarm verbunden wird, indem ein erster abgewinkelter Teil des Bedienhebels in einen vom Hebelarm gebildeten Hohlraum eingesteckt wird, der Bedienhebel bis zu einem gewinkelten Anschlag rotiert wird, der den zweiten abgewinkelten Teil des Bedienhebels auf mindestens zwei Seiten umfasst, damit er gegen ein Herausrutschen aus dem Hebelarm gesichert ist. Diese Art der Ausgestaltung und Montage des Bedienhebels ermöglicht eine äußerst schnelle Anbringung des Hebels bei der Montage des Aufsitzmähers.

Grundsätzlich können unterschiedliche Federelemente zur Unterstützung des Anhebens des Mähdecks und gleichzeitiger federnder Spannung des Bedienhebels in die Rastierung verwendet werden. Allerdings ist es bezüglich der Einfachheit des Aufbaues besonders günstig, wenn das mindestens eine Federelement eine einzige Spiralfeder ist, welche schräg zu einer vom Bedienhebel beschriebenen Rotationsebene verläuft. Hierdurch wird mit nur einem einzigen Bauelement bei gleichzeitig optimierter Gegenkraft gegen das Gewichtsmoment des Mähdecks auch ein gefedertes Einrasten in die Rastierung erreicht.

Bezüglich der erfindungsgemäßen Ausgestaltung des Aufsitzmähers schlagen die Erfinder ergänzend vor, dass an der Höhenverstellachse mindestens ein exzentrisches Bauteil angeordnet ist und die mindestens eine Achsenlagerung einseitig offen als L- oder T-förmige Aussparung ausgebildet sind, wobei das exzentrisch zur Höhenverstellachse angeordnete Bauteil durch ein Verdrehen der Höhenverstellachse in eine Position gegenüber einem Gegenpart gebracht wird, welche ein Ausrücken der Höhenverstellachse aus der mindestens einen Achsenlagerung verhindert.

Weiterhin kann das Verbindungselement zwischen dem mindestens einen Schwenkarm und dem mindestens einen Hebelarm als flexibler, vorzugsweise längenverstellbarer, Draht ausgebildet werden. Alternativ hierzu kann auch das Verbindungselement zwischen dem mindestens einen Schwenkarm und dem mindestens einen Hebelarm als starre Verbindungsstange ausgebildet werden. Wird eine Verbindungsstange verwendet, so kann diese einseitig ein Gewinde und eine Stellschraube aufweisen, wobei sie mit dieser Seite lose durch den Hebelarm gesteckt ist. Bei dieser Ausführung ist es möglich, durch Verstellen der Stellschraube die Höhe des Mähdecks zu justieren.

Des Weiteren schlagen die Erfinder vor, in einer besonders einfachen Bauweise die Kulisse für den Bedienhebel in eine Radabdeckung zu integrieren. Andererseits besteht auch die Möglichkeit diese Kulisse für den Bedienhebel als separates Bauteil, vorzugsweise mit der Rastierung für den Bedienhebel, auszugestalten und als gesondertes Bauteil auszubilden.

Im Folgenden wird die Erfindung anhand eines bevorzugten Ausführungsbeispieles mit Hilfe der Figuren näher beschrieben, wobei nur die zum Verständnis der Erfindung notwendigen Merkmale dargestellt sind.

Es zeigen im Einzelnen:
- FIG 1:: Seitenansicht des erfindungsgemäßen Aufsitzmähers - ohne Karosserie und Motor -;
- FIG 2:: Draufsicht auf den erfindungsgemäßen Aufsitzmäher - ohne Karosserie und Motor -;
- FIG 3:: Schrägansicht des erfindungsgemäßen Aufsitzmähers - ohne Karosserie und Motor -;
- FIG 4 bis FIG 8:: Darstellungen der schrittweisen Montage der Höhenverstellvorrichtung, jeweils mit einer Ausschnittsvergrößerung in Seitenansicht;
- FIG 9:: Darstellung der Höhenverstellung des Mähdecks schräg von unten;
- FIG 10:: Darstellung einer erfindungsgemäßen Kulisse für den Bedienhebel in einer Randabdeckung, einschließlich Detailvergrößerung;
- FIG 11:: Schräge 3-D-Ansicht der Höhenverstellachse mit zwei endseitig angeordneten Hebelarmen;
- FIG 12:: 3-D-Darstellung des Bedienhebels;
- FIG 13:: 3-D-Darstellung der Höhenverstellachse mit endseitig angeordneten Hebelarmen und einem daran montierten Bedienhebel.

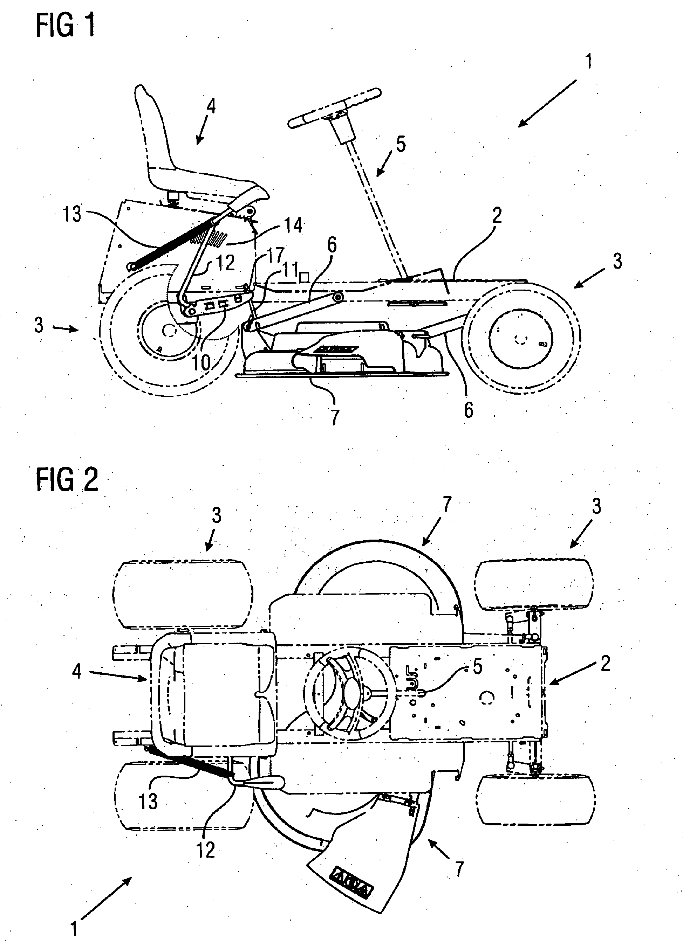

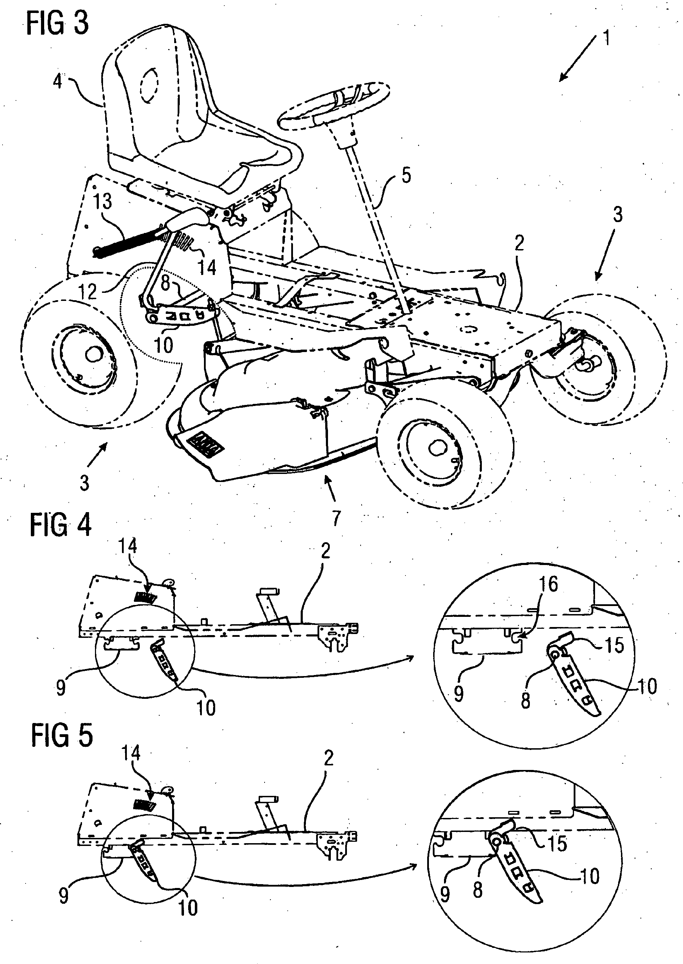

Die **Figuren 1 bis 3** zeigen den erfindungsgemäßen Aufsitzmäher in einer bevorzugten Ausführungsform in einer Seitenansicht (Figur 1), einer Draufsicht (Figur 2) und einer Schrägansicht (Figur 3). Zur besseren Darstellung des montierten Mähdecks sind nicht erfindungswesentliche Teile - wie der Antrieb und die Karosserie - weggelassen.

Der Aufsitzmäher 1 besteht aus einer Tragkonstruktion 2, einem Fahrgestell 3 mit seinen Randaufhängungen, einem Sitz 4, einer Lenkvorrichtung 5 und einem an vier Schwenkarmen 6 aufgehängtes Mähdeck 7, welches zwischen dem vorderen Räderpaar und dem hinteren Räderpaar angeordnet ist. Das Mähdeck 7 verfügt über eine Höhenverstellvorrichtung, bestehend aus einer quer zur Fahrtrichtung verlaufenden Höhenverstellachse 8, welche in hier nicht sichtbaren offenen Achsenlagerungen gelagert ist, wobei an der Höhenverstellachse 8 auf beiden Seiten endständig angebracht zwei Hebelarme 10 angeordnet sind, welche über einen, im vorliegenden Beispiel als Handhebel ausgebildeten, Bedienhebel 12 verschwenkt werden können und über eine Verbindungsstange 11 die beiden hinteren Schwenkarme 6 verschwenken. Dadurch, dass das Mähdeck 7 über die vier Schwenkarme 6 trapezartig mit der Tragkonstruktion 2 schwenkbar verbunden sind, wird durch eine Bewegung der Hebelarme 10 eine Veränderung des Abstandes zwischen Boden und Mähdeck herbeigeführt.

Die Verbindungsstange 11 ist einerseits im Schwenkarm 6 eingehängt und wird andererseits am Hebelarm 10 durch eine Öffnung durchgeführt und auf der Oberseite mit Hilfe einer auf einem Gewinde aufgeschraubten Stellschraube 17 nach oben gehalten. Wird das Mähdeck 7, zum Beispiel im Betrieb durch das Überfahren eines Erdhügels oder ähnlicher Hindernisse, nach oben gedrückt, so kann die Verbindungsstange 11 durch die Öffnung des Hebelarmes 10 gedrückt werden, ohne dass hierdurch die eingestellte Lage des Hebelarmes 10 verändert wird. Ist das Hindernis danach überfahren und das Mähdeck 7 kann wieder nach unten ausweichen, so fällt es wieder in seine alte Lage zurück, wobei die genau Positionierung dieser Lage durch die Stellschraube 17 justiert werden kann und durch den Bedienhebel 12 in Verbindung mit der Rastierung 14 im Betrieb eingestellt werden.

Der Bedienhebel 12 wird mit Hilfe eines Federelementes, hier eine Spiralfeder 13, die einerseits am Bedienhebel 12 und andererseits an der Tragkonstruktion 2 des Aufsitzmähers 1 befestigt ist, vorgespannt, so dass die auf den Bedienhebel 12 wirkende Gewichtskraft des Mähdecks 7 zum großen Teil kompensiert wird. Zusätzlich wird in dieser Ausführung durch die Spiralfeder 13 ein Einrücken des Bedienhebels 12 in die Rastierung 14 bewirkt, da die Zugrichtung der Spiralfeder 13 aus der Rotationsebene des Bedienhebels 12 um die Höhenverstellachse 8 verläuft, so dass eine Federkomponente den Bedienhebel 12 zusätzlich in Richtung der Rastierung 14 schwenkt. Dieser Bedienhebel 12 ist dabei so ausgestaltet und mit den Hebelarm 10 verbunden, dass dieser gewinkelt ausgebildete Bedienhebel 12 mit einem Teilstück in den Hebelarm 10 eingeschoben ist und dieses Teilstück als Drehachse für den restlichen Bedienhebel wirkt, so dass er in die Rastierung 14, unterstützt durch die Spiralfeder 13, einschwenken kann.

Ein nicht unwesentlicher Effekt der erfindungsgemäßen Ausgestaltung des Aufsitzmähers besteht in der sehr einfachen Montage der Höhenverstellvorrichtung. Diese wird in den Figuren 4 bis 8 in einer Seitenansicht mit einem jeweils herausgezogenen Detail näher beschrieben.

Die **Figur 4** zeigt in einer Seitenansicht die Tragkonstruktion 2, an der an der Unterseite eine Halterung 9 angebracht ist, welche auf der Vorderseite eine etwa L-förmig aussehende Aussparung aufweist, welche als Achsenlagerung 16 dienen soll. Diese Aussparung ist in Fahrtrichtung offen, so dass die Höhenverstellachse 8, an der endseitig jeweils ein Hebelarm 10 befestigt ist, eingesetzt werden kann, indem der Hebelarm 10 nach unten ausgerichtet wird.

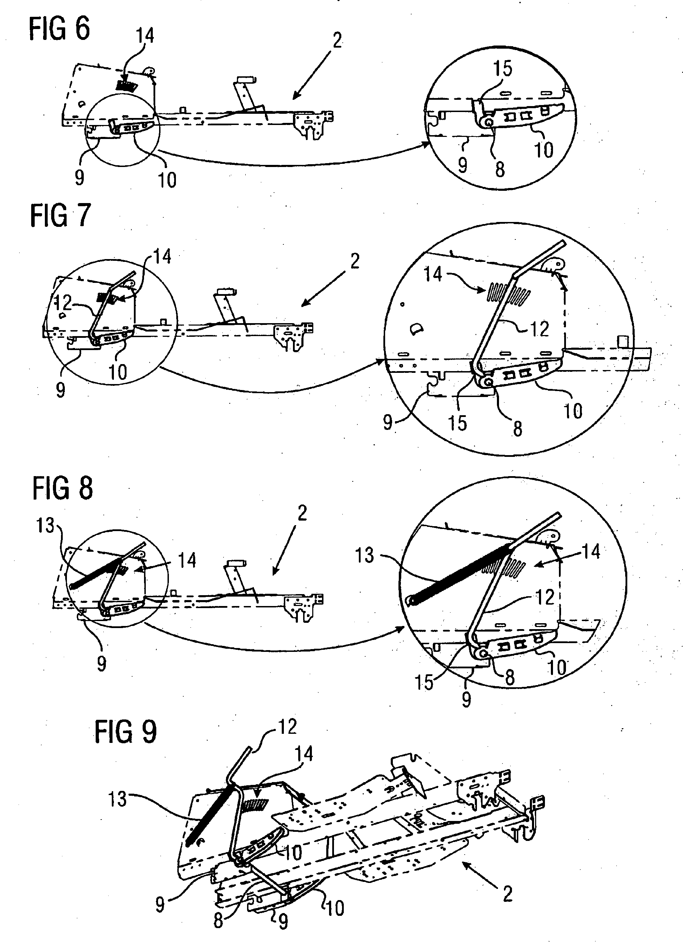

Die **Figur 5** zeigt die Montagesituation, in der die Höhenverstellachse 8 in die L-förmig ausgebildete Achsenlagerung 16 eingesetzt worden ist. Nun wird die Höhenverstellachse 8 um etwa 70 bis 80° entgegen dem Uhrzeigersinn gedreht, so dass sich der Hebearm 10 etwa waagrecht ausrichtet, wie es in der **Figur 6** zu erkennen ist. Durch diese Drehbewegung bewegt sich ein exzentrisch zur Höhenverstellachse 8 angeordnetes Bauteil, welches beispielsweise auch mit dem Hebelarm 10 selbst kombiniert werden kann, unter einem Anschlag, so dass ein Anheben der Achse in der L-förmig ausgebildeten Achsenlagerung 16 nicht mehr möglich wird. Da jedoch ein Anheben der Achse 8 in der Aussparung notwendig ist, um es nach vorne auszurücken, ist damit die Achse 8 in der Achsenlagerung 16 drehbar fixiert.

Die **Figur 7** zeigt dann zusätzlich den montierten Bedienhebel 12, welcher mit dem unteren abgewinkelten Teilstück in den Hebelarm 10 eingeschoben wird, wobei das obere Teilstück des Bedienhebels 12 aus der Zeichenebene herausragt. Nachdem er eingeschoben ist, wird der Hebel nach oben, also in die Zeichenebene verkippt, bis er am Anschlag 15 in seiner Drehbewegung gestoppt wird. Der Anschlag 15 ist hier L-förmig ausgebildet, so dass der Hebel in dieser Drehstellung nicht mehr nach hinten ausweichen kann.

Nun kann der Bedienhebel 12 mit einem Federelement 13, wie es die **Figur 8** zeigt, versehen werden, das federnd gegen den Anschlag 15 drückt und dabei gleichzeitig in der Rastierung 14 festhält. Durch die hier gezeigte Ausrichtung der Spiralfeder 13 wird allerdings nicht nur der Bedienhebel 12 in die Rastierung 14 gedrückt, sondern gleichzeitig auch eine federnde Gegenkraft gegen das Gewicht des Mähdecks, welches auf den Hebelarm 10 einwirkt, ausgeübt.

Ergänzend ist in der **Figur 9** nochmals eine schräge Ansicht von unten auf die Tragkonstruktion 2 gezeigt. Es ist die Höhenverstellvorrichtung mit den beiden Hebelarmen 10, die an der Höhenverstellachse 8 befestigt sind, und der daran angelenkte Bedienhebel 12 mit der Spiralfeder 13 im angebauten Zustand an der Tragkonstruktion 2 zu erkennen.

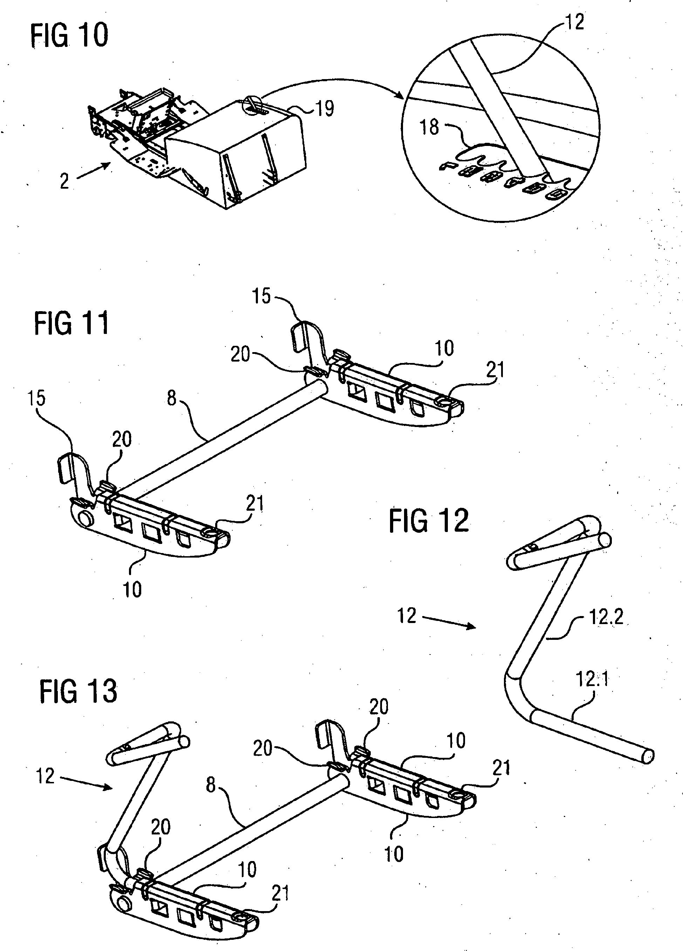

Befindet sich der Bedienhebel 12 in der in der **Figur 10** gezeigten Position, so kann eine Kulisse über diesen geschoben werden, so dass sich der Bedienhebel 12 lediglich noch innerhalb dieser Kulisse bewegen kann. Eine solche Kulisse 18 ist in der Figur 10 in Form eines Ausschnittes in einem Karosseriebauteil 19, hier eine Radverkleidung des Hinterrades, dargestellt. Es wird allerdings darauf hingewiesen, dass es auch im erfindungsgemäßen Rahmen liegt, eine solche Kulisse separat anzubauen oder in Kombination mit einer Rastierung für den Bedienhebel auszuführen und anzubauen.

Die **Figur 11** zeigt nochmals zur Verdeutlichung des Aufbaus der Höhenverstellvorrichtung die Höhenverstellachse 8 mit den endseitig an der Achse 8 befestigten Hebelarmen 10. Diese Hebelarme 10 verfügen auf der der Höhenverstellachse 8 gegenüberliegenden Seite über zwei Öffnungen 21, durch die die Verbindungsstangen geführt werden. In der hier gezeigten Ausführung ist der Hebelarm 10 in einem gemeinsamen Bauteil mit dem Anschlag 15 hergestellt, welcher L-förmig ausgebildet ist und einerseits eine Drehbegrenzung für den Bedienhebel um den ersten abgewinkelten Teil (siehe Figur 12 Bezugszeichen 12.1) darstellt und andererseits mit der rechtwinklig angeordneten Lasche ein Ausrücken des Bedienhebels aus dem Hebelarm 10 verhindert. Des Weiteren ist in diesem Bauteil auch der Exzenter 20 integriert, welcher nach einer entsprechenden Verdrehung der Achse 8 ein Ausrücken der Höhenverstellachse 8 aus der Achslagerung verhindert. Diese Exzenter 20 sind hier auf ihrer Oberseite etwa kreisförmig ausgebildet, so dass bei einer Drehbewegung im Rahmen der Rastierung jeweils ein konstanter Abstand beziehungsweise ein konstantes Anliegen an einem oberen Anschlag, beispielsweise einem Bauteil der Tragkonstruktion, bewirkt wird.

In der **Figur 12** ist nochmals der Bedienhebel 12 dargestellt, der einen ersten abgewinkelten Teil 12.1 aufweist, welcher in den Hebelarm eingeschoben werden kann und einen zweiten abgewinkelten Teil 12.2 aufweist, der als eigentlicher Bedienhebel wirkt.

Die **Figur 13** zeigt das Bauteil aus Figur 11 in Kombination mit dem eingeschobenen Bedienhebel 12. Der Bedienhebel 12 kann somit einerseits die Drehbewegung des gesamten Bauteiles um die Achse 8 bewirken, welche ein Anheben oder Absenken des Mähdecks zur Folge hat und gleichzeitig doch auch ein Verschwenken des Bedienhebels 12 um den als Drehachse wirkenden ersten abgewinkelten Teil 12.1, der im Hebelarm 10 gelagert ist, zu ermöglichen, so dass ein Ein- und Ausrücken in der Rastierung beziehungsweise der Kulisse und damit eine Fixierung der Höhenverstellung ermöglich wird.

Es wird darauf hingewiesen, dass es auch im Rahmen der Erfindung liegt, wenn alternativ zu der hier gezeigten Rastierung 14 im Gehäuse ein separates Element für die Rastierung vorgesehen wird, wobei diese Rastierung auch auf der Außenseite des Bedienhebels angreifen kann.

Insgesamt wird also durch den erfindungsgemäßen Aufbau des Aufsitzmähers, ein Aufsitzmäher zur Verfügung gestellt, welcher einerseits wesentlich montagefreundlicher ausgestaltet ist und andererseits eine Höhenverstellvorrichtung besitzt, welche auch beim Überfahren von Unebenheiten und dadurch bedingtes Anheben des Mähdecks seine Höheneinstellung nicht verliert.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Bezugszeichenliste

- 1: Aufsitzmäher
- 2: Tragkonstruktion
- 3: Fahrgestell
- 4: Sitz
- 5: Lenkvorrichtung
- 6: Schwenkarm
- 7: Mähdeck
- 8: Höhenverstellachse
- 9: Halterung
- 10: Hebelarm
- 11: Verbindungsstange
- 12: Bedienhebel
- 12.1: erster abgewinkelter Teil des Bedienhebels
- 12.2: zweiter abgewinkelter Teil des Bedienhebels
- 13: Spiralfeder
- 14: Rastierung
- 15: Anschlag
- 16: Achsenlagerung
- 17: Stellschraube
- 18: Kulisse
- 19: Karosseriebauteil
- 20: Exzenter
- 21: Öffnung

## Patentansprüche

1. Aufsitzmäher (1) aufweisend:
eine Tragkonstruktion (2),
ein Fahrgestell (3),
einen Sitz (4),
eine Lenkvorrichtung (5),
ein, an mindestens zwei Schwenkarmen (6) aufgehängtes, Mähdeck (7), und
einer Höhenverstellvorrichtung für das Mähdeck (7), wobei;
die Höhenverstellvorrichtung (8, 9, 10, 12, 13) eine quer zur Längsrichtung des Mähers (1) verlaufende Höhenverstellachse (8) aufweist,
mindestens ein Schwenkarm (6) über ein Verbindungselement (11) mit mindestens einem Hebelarm (10) verbunden ist und der Hebelarm (10) an der Höhenverstellachse (8) befestigt ist,
einem Bedienhebel (12), der am Hebelarm (10) schwenkbar befestigt ist, wobei der Bedienhebel (12) mittelbar o- der ummittelbar im endmontierten Zustand in eine Rastierung (14) eingreifen kann,
**dadurch gekennzeichnet, dass** die Tragkonstruktion (2) unten mindestens eine in Längsrichtung_offene Achsenlagerung (16) aufweist, in welcher die Höhenverstellachse (8) gelagert ist.

2. Aufsitzmäher (1) gemäß dem voranstehenden Patentanspruch 1, **dadurch gekennzeichnet, dass** mindestens ein Federelement (13) am Bedienhebel (12) angeordnet ist, welches bezüglich seiner Federwirkung so ausgerichtet ist, dass es gegen das Gewicht des Mähdecks (7) wirkt und/oder den Bedienhebel (12) in der Rastierung (14) federnd fixiert.

3. Aufsitzmäher (1) gemäß dem voranstehenden Patentanspruch 2, **dadurch gekennzeichnet, dass** die mindestens eine Achsenlagerung (16) und die Höhenverstellachse (8) mit dem mindestens einen daran befestigtem Hebelarm (10) derart ausgebildet sind, dass zur Montage der Höhenverstellvorrichtung (8, 16, 10, 12, 13):
- die Höhenverstellachse (8) mit dem mindestens einen daran befestigten Hebelarm (10) in einer ersten Drehlage in die mindestens eine Achsenlagerung (16) eingesetzt wird,
- die Höhenverstellachse (8) mit dem mindestens einen daran befestigten Hebelarm (10) in eine zweite Drehlage verdreht wird,
- und durch Aufsetzen einer Kulisse (18) für den mit dem Hebelarm (10) verbundenen Bedienhebel (12) die Höhenverstellachse (8) gegen ein Herausfallen aus der mindestens einen Achsenlagerung (16) gesichert wird.

4. Aufsitzmäher (1) gemäß dem voranstehenden Patentanspruch 3, **dadurch gekennzeichnet, dass** zur Montage der Höhenverstellvorrichtung (8, 16, 10, 12, 13):
- der Bedienhebel (12) mit dem Hebelarm (10) verbundenen wird, indem ein erster abgewinkelter Teil (12.1) des Bedienhebels (12) in einen vom Hebelarm (10) gebildeten Hohlraum eingesteckt wird,
- der Bedienhebel (12) bis zu einem gewinkelten Anschlag (15) rotiert wird, der den zweiten abgewinkelten Teil (12.2) des Bedienhebels (12) auf mindestens zwei Seiten umfasst.

5. Aufsitzmäher (1) gemäß einem der voranstehenden Patentansprüche 2 bis 4, **dadurch gekennzeichnet, dass** das mindestens eine Federelement (13) eine einzige Spiralfeder ist, welche schräg zu einer vom Bedienhebel (12) beschriebenen Rotationsebene verläuft.

6. Aufsitzmäher (1) gemäß einem der voranstehenden Patentansprüche 1 bis 5, **dadurch gekennzeichnet, dass** an der Höhenverstellachse (8) mindestens ein exzentrisches Bauteil (20) angeordnet ist und die Achsenlagerungen (16) einseitig offen als L- oder T-förmige Aussparung ausgebildet sind, wobei das exzentrisch zur Höhenverstellachse (8) angeordnete Bauteil (20) durch ein Verdrehen des Höhenverstellachse (8) in eine Position gegenüber einem Gegenpart (2) gebracht wird, welche ein Ausrücken der Höhenverstellachse (8) aus der mindestens einen Achsenlagerung (16) verhindert.

7. Aufsitzmäher (1) gemäß einem der voranstehenden Patentansprüche 1 bis 6, **dadurch gekennzeichnet, dass** das Verbindungselement (11) zwischen dem mindestens einen Schwenkarm (6) und dem mindestens einen Hebelarm (10) als starre Verbindungsstange ausgebildet ist.

8. Aufsitzmäher (1) gemäß dem voranstehenden Patentanspruch 7, **dadurch gekennzeichnet, dass** die Verbindungsstange (11) einseitig ein Gewinde und eine Stellschraube (17) aufweist und lose durch den Hebelarm (10) gesteckt ist.

9. Aufsitzmäher (1) gemäß einem der voranstehenden Patentansprüche 3 bis 8, **dadurch gekennzeichnet, dass** die Kulisse (18) für den Bedienhebel (12) in eine Radabdeckung (19) integriert ist.

10. Aufsitzmäher (1) gemäß einem der voranstehenden Patent-ansprüche 2 bis **8, dadurch gekennzeichnet, dass** die Kulisse (18) für den Bedienhebel (12) als separates Bauteil, vorzugsweise mit der Rastierung (14') kombiniert, ausgebildet ist.

11. Aufsitzmäher (1) gemäß einem der voranstehenden Patentansprüche 1 bis 10, **dadurch gekennzeichnet, dass** an der Höhenverstellachse (8) links und rechts zwei Hebelarme (10) befestigt sind, an welchen jeweils ein Federelement angreift.

12. Aufsitzmäher (1) gemäß einem der voranstehehden Patentansprüche 1 bis 11, **dadurch gekennzeichnet, dass** ein separates Element für die Rastierung (14) vorgesehen ist, welches auf der Außenseite des Bedienhebels (12) angeordnet ist.

## Claims

1. Riding mower (1) having:
a supporting structure (2),
a chassis (3),
a seat (4),
a steering device (5),
a mower deck (7) suspended on at least two pivot arms (6), and
a height adjustment device for the mower deck (7),
wherein the height adjustment device (8, 9, 10, 12, 13) has a height adjustment axle (8) running transversely with respect to the longitudinal direction of the mower (1),
at least one pivot arm (6) is connected via a connecting element (11) to at least one lever arm (10), and the lever arm (10) is fastened to the height adjustment axle (8),
an operating lever (12) which is fastened pivotably to the lever arm (10), wherein, in the finally fitted state, the operating lever (12) can engage directly or indirectly in a latching mechanism (14),
**characterized in that** the supporting structure (2) has, at the bottom, at least one axle mounting (16) which is open in the longitudinal direction and in which the height adjustment axle (8) is mounted.

2. Riding mower (1) according to the preceding Patent Claim 1, **characterized in that** at least one spring element (13) is arranged on the operating lever (12), which spring element is oriented with respect to the spring action thereof in such a manner that it acts counter to the weight of the mower deck (7) and/or resiliently fixes the operating lever (12) in the latching mechanism (14).

3. Riding mower (1) according to the preceding Patent Claim 2, **characterized in that** the at least one axle mounting (16) and the height adjustment axle (8) with the at least one lever arm (10) fastened thereto are designed in such a manner that, for the installation of the height adjustment device (8, 16, 10, 12, 13):
- the height adjustment axle (8) with the at least one lever arm (10) fastened thereto is inserted in a first rotational position into the at least one axle mounting (16),
- the height adjustment axle (8) with the at least one lever arm (10) fastened thereto is rotated into a second rotational position,
- and, by placing on a slotted guide mechanism (18) for the operating lever (12) connected to the lever arm (10), the height adjustment axle (8) is secured against dropping out of the at least one axle mounting (16).

4. Riding mower (1) according to the preceding Patent Claim 3, **characterized in that**, in order to install the height adjustment device (8, 16, 10, 12, 13):
- the operating lever (12) is connected to the lever arm (10) by a first bent part (12.1) of the operating lever (12) being inserted into a cavity formed by the lever arm (10), 1
- the operating lever (12) is rotated as far as an angled stop (15) which surrounds the second bent part (12.2) of the operating lever (12) on at least two sides.

5. Riding mower (1) according to one of the preceding Patent Claims 2 to 4, **characterized in that** the at least one spring element (13) is a single spiral spring which runs obliquely with respect to a rotation plane described by the operating lever (12)

6. Riding mower (1) according to one of the preceding Patent Claims 1 to 5, **characterized in that** at least one eccentric component (20) is arranged on the height adjustment axle (8), and the axle mountings (16) are designed to be open on one side as an L- or T-shaped recess, wherein the component (20) arranged eccentrically with respect to the height adjustment axle (8) is brought by rotation of the height adjustment axle (8) into a position in relation to a counterpart (2), which position prevents the height adjustment axle (8) from being disengaged from the at least one axle mounting (16).

7. Riding mower (1) according to one of the preceding Patent Claims 1 to 6, **characterized in that** the connecting element (11) between the at least one pivot arm (6) and the at least one lever arm (10) is designed as a rigid connecting rod.

8. Riding mower (1) according to the preceding Patent Claim 7, **characterized in that** the connecting rod (11) has a thread and an adjustment screw (17) on one side and is plugged loosely through the lever arm (10).

9. Riding mower (1) according to one of the preceding Patent Claims 3 to 8, **characterized in that** the slotted guide mechanism (18) for the operating lever (12) is integrated into a wheel cover (19).

10. Riding mower (1) according to one of the preceding Patent Claims 2 to 8, **characterized in that** the slotted guide mechanism (18) for the operating lever (12) is designed as a separate component, preferably combined with the latching mechanism (14).

11. Riding mower (1) according to one of the preceding Patent Claims 1 to 10, **characterized in that** two lever arms (10) on which a respective spring element acts are fastened on the left and right to the height adjustment axle (8).

12. Riding mower (1) according to one of the preceding Patent Claims 1 to 11, **characterized in that** a separate element which is arranged on the outer side of the operating lever (12) is provided for the latching mechanism (14).

## Revendications

1. Tondeuse autoportée (1) comprenant :
une structure de support (2),
un châssis (3),
un siège (4),
un dispositif de direction (5),
un carter de coupe (7) suspendu sur au moins deux bras pivotants (6), et
un dispositif de réglage en hauteur pour le carter de coupe (7),
le dispositif de réglage en hauteur (8, 9, 10, 12, 13) comprenant un axe de réglage en hauteur (8) s'étendant transversalement à la direction longitudinale de la tondeuse (1),
au moins un bras pivotant (6) étant relié à au moins un bras de levier (10) par le biais d'un élément de liaison (11) et le bras de levier (10) étant fixé à l'axe de réglage en hauteur (8),
un levier de commande (12) qui est fixé de manière pivotante au bras de levier (10), le levier de commande (12) pouvant venir en prise directement ou indirectement, à l'état monté final, dans un encliquetage (14),
**caractérisée en ce que**
la structure de support (2) comprend sur le dessous au moins un support d'axe (16) ouvert dans la direction longitudinale, dans lequel est monté l'axe de réglage en hauteur (8).

2. Tondeuse autoportée (1) selon la revendication 1 précédente, **caractérisée en ce qu'**au moins un élément de ressort (13) est disposé sur le levier de commande (12), lequel élément de ressort est orienté par rapport à son action de ressort de telle sorte qu'il agisse à l'encontre du poids du carter de coupe (7) et/ou fixe de manière élastique le levier de commande (12) dans l'encliquetage (14).

3. Tondeuse autoportée (1) selon la revendication 2 précédente, **caractérisée en ce que** l'au moins un support d'axe (16) et l'axe de réglage en hauteur (8) avec l'au moins un bras de levier (10) fixé à celui-ci sont réalisés de telle sorte que, pour le montage du dispositif de réglage en hauteur (8, 16, 10, 12, 13) :
- l'axe de réglage en hauteur (8) avec l'au moins un bras de levier (10) fixé à celui-ci est inséré dans l'au moins un support d'axe (16) dans une première position angulaire,
- l'axe de réglage en hauteur (8) avec l'au moins un bras de levier (10) fixé à celui-ci est tourné jusqu'à une deuxième position angulaire,
- et l'axe de réglage en hauteur (8) est empêché de tomber hors de l'au moins un support d'axe (16) par placement d'une coulisse (18) pour le levier de commande (12) relié au bras de levier (10).

4. Tondeuse autoportée (1) selon la revendication 3 précédente, **caractérisée en ce que**, pour le montage du dispositif de réglage en hauteur (8, 16, 10, 12, 13) :
- le levier de commande (12) est relié au bras de levier (10), en introduisant une première partie courbée (12.1) du levier de commande (12) dans un espace creux formé par le bras de levier (10),
- le levier de commande (12) est tourné jusqu'à une butée coudée (15) qui entoure la deuxième partie courbée (12.2) du levier de commande (12) sur au moins deux côtés.

5. Tondeuse autoportée (1) selon l'une quelconque des revendications 2 à 4 précédentes, **caractérisée en ce que** l'au moins un élément de ressort (13) est un ressort spiral unique qui s'étend de manière oblique par rapport à un plan de rotation décrit par le levier de commande (12).

6. Tondeuse autoportée (1) selon l'une quelconque des revendications 1 à 5 précédentes, **caractérisée en ce qu'**au moins un composant excentrique (20) est disposé sur l'axe de réglage en hauteur (8) et les supports d'axe (16) sont réalisés de manière ouverte d'un côté en tant qu'évidement en forme de L ou de T, le composant (20) disposé de manière excentrique par rapport à l'axe de réglage en hauteur (8) étant amené, par une rotation de l'axe de réglage en hauteur (8), à une position par rapport à un pendant (2), laquelle position empêche un désaccouplement de l'axe de réglage en hauteur (8) hors de l'au moins un support d'axe (16).

7. Tondeuse autoportée (1) selon l'une quelconque des revendications 1 à 6 précédentes, **caractérisée en ce que** l'élément de liaison (11) entre l'au moins un bras pivotant (6) et l'au moins un bras de levier (10) est réalisé en tant que tige de liaison rigide.

8. Tondeuse autoportée (1) selon la revendication 7 précédente, **caractérisée en ce que** la tige de liaison (11) présente, d'un côté, un filetage et une vis de réglage (17) et est enfichée de manière lâche à travers le bras de levier (10).

9. Tondeuse autoportée (1) selon l'une quelconque des revendications 3 à 8 précédentes, **caractérisée en ce que** la coulisse (18) pour le levier de commande (12) est intégrée dans un garde-boue (19).

10. Tondeuse autoportée (1) selon l'une quelconque des revendications 2 à 8 précédentes, **caractérisée en ce que** la coulisse (18) pour le levier de commande (12) est réalisée en tant que composant séparé, de préférence est combinée avec l'encliquetage (14).

11. Tondeuse autoportée (1) selon l'une quelconque des revendications 1 à 10 précédentes, **caractérisée en ce que** deux bras de levier (10) sont fixés à l'axe de réglage en hauteur (8) à gauche et à droite, sur lesquels bras de levier agit respectivement un élément de ressort.

12. Tondeuse autoportée (1) selon l'une quelconque des revendications 1 à 11 précédentes, **caractérisée en ce qu'**un élément séparé est prévu pour l'encliquetage (14), lequel élément séparé est disposé sur le côté extérieur du levier de commande (12).
